# EUROPEAN PATENT APPLICATION

(11) **EP 4 459 974 A1**
(43) Date of publication of application: **06.11.2024**
(21) Application number: 22914413.4
(22) Date of filing: 20.12.2022
(51) Int. Cl.: H04N 5/14

(54) **VIDEO GENERATION CIRCUITS, VIDEO GENERATION METHOD, AND ELECTRONIC DEVICES**

(30) Priority: 28.12.2021 CN 202111630118
(71) Applicant: VIVO MOBILE COMMUNICATION CO., LTD., Dongguan, Guangdong 523863 (CN)
(72) Inventor: DENG, Weize, Dongguan, Guangdong 523863 (CN)
(74) Representative: Murgitroyd & Company
(86) International application number: PCT/CN2022/140407
(87) International publication number: WO 2023/125159

(57) **Abstract**

This application discloses a video generation circuit and method, and an electronic device, and pertains to the field of video processing technologies. The circuit includes an image processing chip, a master control chip, and a display chip, and the master control chip is separately connected to the image processing chip and the display chip. The image processing chip is configured to obtain an original video captured by a camera. The master control chip is configured to send the original video to the display chip. The display chip is configured to obtain an insertion file, and generate a target video based on the original video and the insertion file.

## Description

### CROSS-REFERENCE TO RELATED APPLICATION

This application claims priority to Chinese Patent Application No. 202111630118.9, filed on December 28, 2021 in China, which is incorporated herein by reference in its entirety.

### TECHNICAL FIELD

This application pertains to the field of video processing technologies, and specifically relates to a video generation circuit and method, and an electronic device.

### BACKGROUND

With development of the electronic device, functions of electronic devices are becoming more and more diverse. For example, the electronic device may be used to edit a video.

Specifically, in a related technology, if a user needs to insert an image into a video, the user may trigger an electronic device to open, by using video editing software, a video stored in the electronic device, and insert, by using the video editing software, an image that the user needs to insert into the video.

However, the foregoing image insertion method has low insertion efficiency and higher power consumption.

### SUMMARY

An objective of embodiments of this application is to provide a video generation circuit and method, and an electronic device, which can improve efficiency of inserting a file into a video, and reduce power consumption.

According to a first aspect, an embodiment of this application provides a video generation circuit. The circuit includes an image processing chip, a master control chip, and a display chip, and the master control chip is separately connected to the image processing chip and the display chip. The image processing chip is configured to obtain an original video captured by a camera. The master control chip is configured to send the original video to the display chip. The display chip is configured to obtain an insertion file, and generate a target video based on the original video and the insertion file.

According to a second aspect, an embodiment of this application provides a video generation method. The method includes: in a case that the original video is displayed in a first screen region and the insertion file is displayed in a second screen region, receiving a first input of a user; and generating a target video based on the original video and the insertion file by using the display chip in response to the first input.

According to a third aspect, an embodiment of this application provides a video generation circuit. The circuit includes an image processing chip, a master control chip, and a display chip, and the image processing chip includes a first obtaining unit and a first interface, the master control chip includes a second interface and a third interface, and the display chip includes a fourth interface, a second obtaining unit, and a processing unit. The first obtaining unit is configured to obtain an original video captured by a camera. The first obtaining unit is connected to the first interface, and the first interface is configured to output the original video. The second interface is separately connected to the first interface and the third interface, and the third interface is configured to output the original video. The third interface is connected to the fourth interface, and the processing unit is separately connected to the second obtaining unit and the fourth interface. The second obtaining unit is configured to obtain an insertion file. The processing unit is configured to generate a target video based on the original video and the insertion file.

According to a fourth aspect, an embodiment of this application provides an electronic device. The electronic device includes a display, and the display is connected to a display chip. The display is configured to display a target video generated by the display chip.

According to a fifth aspect, an embodiment of this application provides an electronic device. The electronic device includes a display, and the display is connected to a processing unit. The display is configured to display a target video generated by the processing unit.

In the embodiments of this application, the video generation circuit includes the image processing chip, the master control chip, and the display chip, and the master control chip is separately connected to the image processing chip and the display chip. The image processing chip is configured to obtain the original video captured by the camera. The master control chip is configured to send the original video to the display chip. The display chip is configured to obtain the insertion file, and generate the target video based on the original video and the insertion file. In this solution, the insertion file is obtained by using the display chip, the target video is generated based on the original video and the insertion file, and frame insertion processing is performed by an independently disposed display chip, thereby improving efficiency of inserting a file into a video, ensuring smoothness and real-time performance of video images, and reducing power consumption of the master control chip.

### BRIEF DESCRIPTION OF DRAWINGS

FIG. 1 is a first schematic structural diagram of a video generation circuit according to an embodiment of this application;
FIG. 2 is a schematic flowchart of a video generation method according to an embodiment of this application;
FIG. 3 is a schematic diagram of processing an image by a display chip in a video generation method according to an embodiment of this application;
FIG. 4 is a first schematic diagram of an interface to which a video shooting method is applied according to an embodiment of this application;
FIG. 5 is a second schematic diagram of an interface to which a video shooting method is applied according to an embodiment of this application;
FIG. 6 is a second schematic structural diagram of a video generation circuit according to an embodiment of this application;
FIG. 7 is a third schematic structural diagram of a video generation circuit according to an embodiment of this application;
FIG. 8 is a fourth schematic structural diagram of a video generation circuit according to an embodiment of this application;
FIG. 9 is a fifth schematic structural diagram of a video generation circuit according to an embodiment of this application;
FIG. 10 is a sixth schematic structural diagram of a video generation circuit according to an embodiment of this application;
FIG. 11 is a schematic diagram of an electronic device according to an embodiment of this application; and
FIG. 12 is a schematic diagram of hardware of an electronic device according to an embodiment of this application.

### DESCRIPTION OF EMBODIMENTS

The following clearly describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the data used in such a way is interchangeable in proper circumstances, so that the embodiments of this application can be implemented in an order other than the order illustrated or described herein. In addition, in this specification and the claims, "and/or" represents at least one of connected objects, and a character "/" generally represents an "or" relationship between associated objects.

With reference to the accompanying drawings, a video generation circuit and method, and an electronic device provided in the embodiments of this application are described in detail below by using a specific embodiment and an application scenario thereof.

The video generation circuit provided in the embodiments of this application may be applied to a scenario in which a file (for example, an image file or a text file) is inserted into a currently shot video.

For example, when a user needs to insert an image (for example, an insertion file in an embodiment of this application) into a currently shot video, an original video shot by a camera may be obtained by using an image processing chip. A master control chip sends the original video to a display chip. The display chip may obtain an image that the user needs to insert, and the display chip may generate a target video based on the original video and the image. For example, the image is inserted into the original video to generate the target video. Frame insertion processing is performed by an independently disposed display chip, thereby improving efficiency of inserting a file into a video, ensuring smoothness and real-time performance of video images, and reducing power consumption of the master control chip.

### Embodiment 1

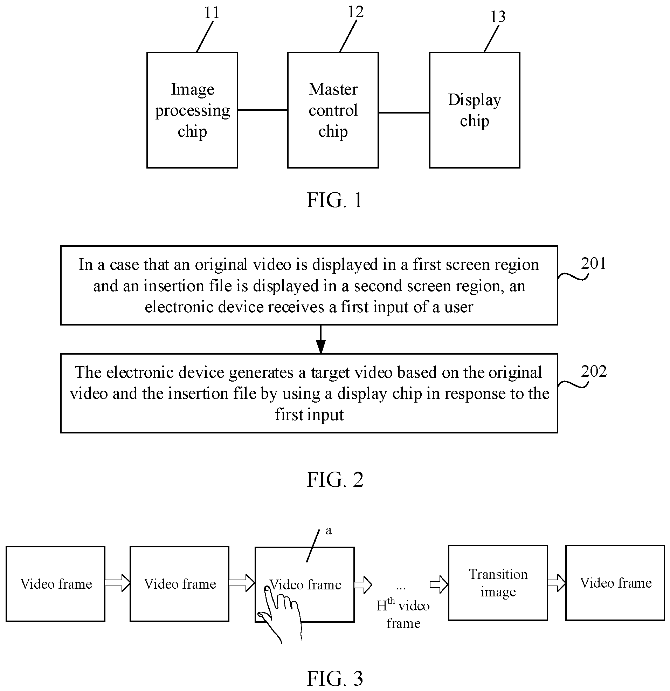

This embodiment of this application provides a video generation circuit. FIG. 1 is a schematic structural diagram of a video generation circuit according to this embodiment of this application. As shown in FIG. 1, the video generation circuit may include an image processing chip 11, a master control chip 12, and a display chip 13.

In this embodiment of this application, the master control chip 12 is separately connected to the image processing chip 11 and the display chip 13. The image processing chip 11 is configured to obtain an original video captured by a camera. The master control chip 12 is configured to send the original video to the display chip 13. The display chip 13 is configured to obtain an insertion file, and generate a target video based on the original video and the insertion file.

It may be understood that in this embodiment of this application, the image processing chip first obtains the original video shot by the camera (that is, video images shot by the camera in real time), and then the image processing chip sends the obtained original video to the master control chip, so that the master control chip may send the original video to the display chip.

In this embodiment of this application, a sequence in which the display chip receives the original video and the display chip obtains the insertion file is not limited, that is, the display chip may obtain the insertion file after receiving the original video, or the display chip may obtain the insertion file before receiving the original video.

Optionally, in this embodiment of this application, the image processing chip may obtain the original video in a process in which the electronic device captures the original video by using the camera.

In this embodiment of this application, the display chip is a chip that has a frame insertion function, a noise reduction function, and a picture effect processing function. The display chip may be used to insert a file (namely, a frame) into the original video in real time, and ensure smooth playing of video images, so as to avoid image lagging.

Optionally, in this embodiment of this application, the insertion file may be at least one of the following: an image, a text, a video/a video segment, a symbol, a document, and the like. Specifically, the insertion file may be determined according to an actual requirement, and is not limited in this embodiment of this application.

Optionally, in this embodiment of this application, there may be one or more insertion files. This may be specifically determined according to an actual requirement, and is not limited in this embodiment of this application.

Optionally, in this embodiment of this application, when the insertion file is an image, the image may be an image customized by the user, or may be a default image of the electronic device. This may be specifically determined according to an actual requirement, and is not limited in this embodiment of this application.

Optionally, in this embodiment of this application, when the image is an image customized by the user, the image may be an image manually drawn by the user, an image downloaded through the electronic device from the network, or an image stored in the electronic device.

Optionally, in this embodiment of this application, in a possible implementation, the display chip may be specifically configured to: insert the insertion file between an N-th video frame and an (N+1)-th video frame of the original video to generate the target video, where N may be a positive integer.

Optionally, in this embodiment of this application, N may be a value defined by the user, or may be a default value of the system. This may be specifically determined according to an actual use requirement, and is not limited in this embodiment of this application.

In this embodiment of this application, the display chip may insert an insertion file between any two video frames of the original video in a form of a separate video segment/video frame, so as to generate the target video. Therefore, flexibility of inserting the file into the video by the electronic device can be improved, and all elements of each video frame of the original video can also be reserved.

Optionally, in this embodiment of this application, in another possible implementation, the display chip may be specifically configured to perform fusion processing on the insertion file and at least one video frame of the original video to obtain at least one fused image; and generate the target video based on the at least one fused image and unfused video frames of the original video.

Optionally, in this embodiment of this application, each video frame in the at least one video frame is corresponding to one fused image, and different video frames are corresponding to different fused images.

In this embodiment of this application, for each video frame in the at least one video frame, the display chip may fuse one video frame with an insertion file to obtain one fused image. After separately fusing the at least one video frame with the insertion file, the display chip may obtain the at least one fused image.

It may be understood that in this embodiment of this application, that the display chip generates the target video based on the at least one fused image and unfused video frames of the original video includes: The display chip is configured to replace the at least one video frame of the original video with the at least one fused image, so as to generate the target video.

For example, it is assumed that the display chip fuses pattern 1 (namely, the insertion file) with a second video frame (namely, the foregoing at least one video frame) of the original video to obtain a fused image, and then replaces the second video frame of the original video with the fused image to generate a target video, that is, a frame number of the fused image in the target video is the same as a frame number 2 of the second frame of image in the original video.

In this embodiment of this application, the display chip may first perform fusion processing on the insertion file and at least one video frame of the original video to obtain at least one fused image, and then generate the target video based on the at least one fused image and the unfused video frames of the original video. Therefore, compared with the original video, at least some video frames of the target video include a newly added element (for example, the insertion file). This can improve flexibility of inserting the file into the original video by the electronic device, and also maintain continuity of video images shot by the camera while enriching elements of at least some of the video frames of the original video.

In the video generation circuit provided in this embodiment of this application, the insertion file is obtained by using the display chip, the target video is generated based on the original video and the insertion file, and frame insertion processing is performed by an independently disposed display chip, thereby improving efficiency of inserting a file into a video, ensuring smoothness and real-time performance of video images, and reducing power consumption of the master control chip.

### Embodiment 2

This embodiment of this application provides a video generation method. FIG. 2 is a schematic flowchart of a video generation method according to this embodiment of this application. The video generation method may be applied to the video generation circuit in Embodiment 1. As shown in FIG. 2, the video generation method provided in this embodiment of this application may include step 201 and step 202 below. An example in which an electronic device including the video generation circuit in Embodiment 1 performs the method is used below for description.

Step 201: In a case that the original video is displayed in a first screen region and the insertion file is displayed in a second screen region, the electronic device receives a first input of a user.

In this embodiment of this application, the original video may be a video currently shot by a camera in the electronic device.

Optionally, in this embodiment of this application, a video frame currently displayed in the first screen region may be a video frame obtained by photographing for the last time in the original video.

Optionally, in this embodiment of this application, in a video shooting process, the electronic device may display a shooting interface (namely, an original video), and display, on the shooting interface, the video frame captured by the camera. If the user needs to change a captured video image, the user may use an input (hereinafter referred to as a target input) to trigger the electronic device to open a fun drawing board function, so that the electronic device may display the original video in the first screen region and display a drawing board interface in the second screen region. The drawing board interface may be configured to display/draw the foregoing insertion file.

Optionally, in this embodiment of this application, after the electronic device displays the drawing board interface based on the target input, the drawing board interface may be a blank interface, that is, no file is displayed in the drawing board interface. Alternatively, the drawing board interface may include a file retained by the user from the most recent use of the drawing board interface, for example, a file drawn by the user in the drawing board interface most recently or a file loaded by the electronic device in the drawing board interface most recently. This may be specifically determined according to an actual use requirement, and is not limited in this embodiment of this application.

Optionally, in this embodiment of this application, the insertion file may be a file manually drawn by the user in the drawing board interface, a file loaded by the electronic device through the drawing board interface, or a file retained by the user from the most recent use of the drawing board interface. This may be specifically determined according to an actual use requirement, and is not limited in this embodiment of this application.

Optionally, in this embodiment of this application, the first screen region and the second screen region may be different regions of a same display in the electronic device, or may be regions of different displays in the electronic device. This may be specifically determined according to an actual use requirement, and is not limited in this embodiment of this application.

Optionally, in this embodiment of this application, the first input may be a touch input, a hovering input, a preset gesture input, a voice input, or the like. This may be specifically determined according to an actual use requirement, and is not limited in this embodiment of this application.

For example, the first input is a drag input by the user to drag the insertion file from the second screen region to the first screen region.

Step 202: The electronic device generates a target video based on the original video and the insertion file by using the display chip in response to the first input.

Optionally, in this embodiment of this application, that the display chip generates a target video based on the original video and the insertion file may be implemented in any one of Implementation 1 to Implementation 3 below: Implementation 1: The display chip inserts the insertion file between any two video frames of the original video to generate the target video. Implementation 2: The display chip fuses the insertion file with the at least one video frame of the original video to obtain the at least one fused image, and replaces the at least one video frame of the original video with the at least one frame of fused image to generate the target video. Implementation 3: The display chip replaces the at least one video frame of the original video with the insertion file, to generate the target video.

Optionally, in this embodiment of this application, in Implementation 1, step 202 may be specifically implemented by using step 202a below.

Step 202a: In response to the first input, the electronic device inserts, by using the display chip, the insertion file between the N-th video frame and the (N+1)-th video frame of the original video to generate the target video.

The N-th video frame may be determined based on a user input. For example, the N-th video frame may be an M-th video frame after the first input, or may be a system default, and N may be a positive integer.

Optionally, in this embodiment of this application, when the insertion file is an image, the display chip may process an image parameter of the image to obtain a target image, where the image parameter of the target image may match an image parameter of a video frame of the original video (the two image parameters are the same, or a matching degree between the two image parameters is greater than or equal to a first preset matching degree).

Optionally, in this embodiment of this application, the image parameter may include at least one of a size and resolution of the image. It should be noted that, in actual implementation, there may be an error between the processed image parameter and the image parameter of the video frame of the original video.

Optionally, in this embodiment of this application, when the N-th video frame is determined based on the user input, a second input for determining the N-th video frame and the first input may be two different inputs.

Optionally, in this embodiment of this application, when the N-th video frame may be determined based on the user input, the display chip may determine the N-th video frame in the following two manners (Manner 1 and Manner 2).

### Manner 1

Optionally, in this embodiment of this application, the user may input a value N in the drawing board interface through the second input, and then the display chip may determine a video frame with a frame number being N in the original video as the N-th video frame, and insert the insertion file between the N-th video frame and the (N+1)-th video frame.

For example, it is assumed that the user inputs a number 6 in the drawing board interface through the second input. Then, the display chip may insert the insertion file between the sixth video frame and the seventh video frame of the original video.

### Manner 2

Optionally, in this embodiment of this application, the display chip may determine the N-th video frame based on a frame number K of a video frame displayed in the first screen region when the electronic device receives the first input and a value H corresponding to the second input, where K may be a positive integer, and H may be an integer.

Specifically, it is assumed that when the electronic device receives the first input, the first screen region displays the K-th video frame of the original video, and the value corresponding to the second input is H, that is, the user inputs the value H in the drawing board interface. Then, N=K+H.

When H is greater than 0, the display chip may insert the foregoing insertion file after an H-th video frame located behind the K-th video frame. When H is less than 0, the display chip may insert the foregoing insertion file after a P-th video frame located before the K-th video frame, where P is an opposite number of H.

For example, it is assumed that when the electronic device receives the first input, video frame a (that is, the K-th video frame of the original video) of the original video is displayed in the first screen region, the user inputs a value H in the drawing board interface through the second input, and H is an integer greater than 0. Then, as shown in FIG. 3, the display chip may insert a transition image (namely, the insertion file) between the H-th video frame and an (H+1)-th video frame that are located behind video frame a.

It should be noted that in this embodiment of this application, a sequence of the first input and the second input may not be limited. For example, the first input may be performed before the second input, or the second input may be performed before the first input. This may be specifically determined according to an actual use requirement, and is not limited in this embodiment of this application.

In this embodiment of this application, the display chip inserts an insertion file between any two video frames of the original video in a form of a separate video segment/video frame, so as to generate the target video, and frame insertion processing is performed by the independently disposed display chip, thereby improving efficiency of inserting a file into a video, ensuring smoothness and real-time performance of video images, and reducing power consumption of the master control chip.

Optionally, in this embodiment of this application, in Implementation 2, step 202 may be specifically implemented by using step 202b and step 202c below.

Step 202b: The electronic device performs fusion processing on the insertion file and at least one video frame of the original video by using the display chip in response to the first input, to obtain at least one fused image.

Step 202c: The electronic device generates the target video based on the at least one fused image and unfused video frames of the original video by using the display chip.

The at least one video frame is determined based on a user input (hereinafter referred to as a third input).

Optionally, in this embodiment of this application, the display chip may fuse the insertion file with the at least one video frame by using an image parameter of the at least one video frame as a reference, to obtain the at least one fused image.

It may be understood that, in this embodiment of this application, an image parameter of the at least one fused image matches the image parameter of the at least one video frame (the two image parameters are the same, or a matching degree between the two image parameters is greater than or equal to a second preset matching degree).

Optionally, in this embodiment of this application, a dedicated fusion algorithm is set in the display chip, so that after receiving the insertion file, the display chip may fuse the insertion file with the at least one video frame of the original video based on the fusion algorithm, to obtain the at least one fused image. In this way, a speed of image fusion can be improved.

In this embodiment of this application, when the electronic device needs to fuse the insertion file with the at least one video frame, the electronic device may directly fuse the insertion file with the at least one video frame by using the fusion algorithm in the display chip, thereby reducing duration of fusing the insertion file with the at least one video frame, and reducing power consumption of the electronic device.

Optionally, in this embodiment of this application, the fused image may include all content in the insertion file, or may include some content in the insertion file (that is, a part of the insertion file). This may be specifically determined according to an actual use requirement, and is not limited in this embodiment of this application.

Optionally, in this embodiment of this application, the electronic device may determine, based on an input end position of the first input, a fusion position of the insertion file in the at least one video frame.

In this embodiment of this application, the input end position of the first input may be a position of the insertion file in the first screen region when the user drags the insertion file into the first screen region and ends dragging.

In this embodiment of this application, because the electronic device may determine, based on the input end position of the first input, the fusion position of the insertion file in the at least one video frame, it may be ensured that the fusion position of the insertion file in the at least one video frame meets an actual fusion requirement of the user, thereby improving user experience.

Optionally, in this embodiment of this application, the at least one video frame may be determined in the following four manners (which are specifically Manner 1 to Manner 4 below).

### Manner 1

Optionally, in this embodiment of this application, the user may input at least one value (each value is an integer) in the drawing board interface through a third input, and the display chip may determine that a video frame with a frame number the same as a value input by the user in the original video as the at least one video frame.

For example, if the user inputs values 3 and 5 in the drawing board interface through the third input, the display chip may determine the third frame and the fifth frame of the original video as the at least one video frame.

### Manner 2

Optionally, in this embodiment of this application, the user may input a fusion period M through the third input, so that the display chip may determine the at least one video frame from the original video based on the fusion period M.

Specifically, it is assumed that the user inputs the fusion period M, and when receiving the first input, the electronic device displays an i-th video frame of the original video in the first screen region, where both M and i are positive integers. (1). The display chip may determine a video frame with a frame number being a multiple of M in the original video as the at least one video frame. (2) The display chip may determine a video frame with a frame number being greater than or equal to i and being a multiple of M in the original video as the at least one video frame. (3) The display chip may determine a video frame with a frame number being less than i and being a multiple of M in the original video as the at least one video frame.

For example, the foregoing (2) is used as an example. It is assumed that M=3 and i=7. Then, the display chip may determine a video frame with a frame number being greater than or equal to 7 and being a multiple of 3 in the original video, for example, a ninth video frame, a twelfth video frame, and a fifteenth video frame in the original video, as the at least one video frame.

### Manner 3

Optionally, in this embodiment of this application, the user may input a value (a positive integer) through the third input, and then the display chip may determine a video frame with a frame number being greater than or equal to the value in the original video as the at least one video frame; or the display chip may determine a video frame with a frame number being less than the value in the original video as the at least one video frame. This may be specifically determined according to an actual use requirement.

For example, if a value input by the user is 6, and all video frames with frame numbers being greater than or equal to the value 6 are selected, the display chip may determine all video frames with frame numbers being greater than or equal to 6 in the original video as the at least one video frame.

### Manner 4

Optionally, in this embodiment of this application, the user may input a value H in the drawing board interface through the third input, and the electronic device displays a video frame with a frame number K in the first screen region when the first input is received. In this case, the display chip may determine a video frame with a frame number being H+K in the original video as the at least one video frame. K may be a positive integer, H may be a positive number, and K+H may be a positive integer.

For example, if a value input by the user is 4 (that is, H=4), and when receiving the first input, the electronic device displays a fifth (that is, K=5) video frame of the original video in the first screen region. Then, the display chip may determine the ninth video frame of the original video as the at least one video frame.

In this embodiment of this application, the display chip may perform fusion processing on the insertion file and at least one video frame of the original video to obtain at least one fused image, and then generate the target video based on the at least one frame of fused image and the unfused video frames of the original video. Therefore, compared with the original video, at least some video frames of the target video include a newly added element (for example, the insertion file). This can improve flexibility of inserting the file into the original video by the electronic device, and also maintain continuity of video images shot by the camera while enriching elements of at least some of the video frames of the original video.

The video generation method provided in the embodiments of this application is illustrated with reference to the accompanying drawings.

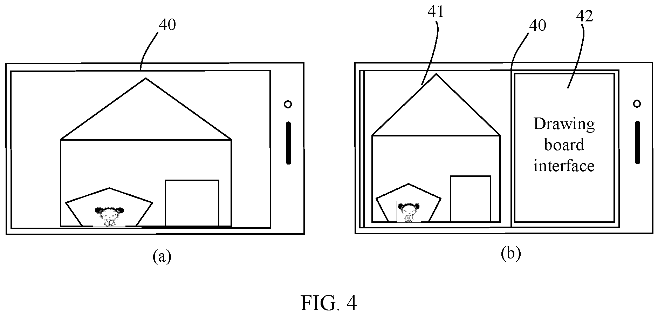

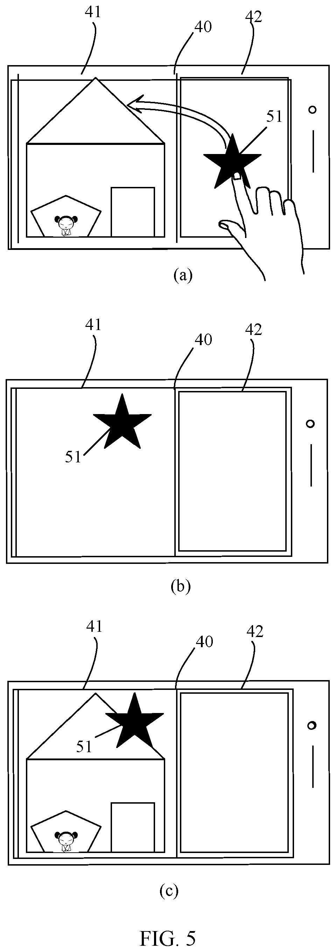

Example 1: In Implementation 1, in a video shooting process, as shown in (a) in FIG. 4, an electronic device displays a video shooting interface in a display 40, and displays, in the video shooting interface, a video frame (namely, an original video) captured by a camera. In this case, if a user needs to change the captured video image, that is, the user needs to insert an image into a currently shot video, the user may make an input to a video shooting interface, for example, the user may trigger, by making an input to a selection menu in the video shooting interface, the electronic device to enable a fun drawing board function of the electronic device. Therefore, as shown in (b) in FIG. 4, the electronic device may display the currently shot video (that is, the original video) in a first screen region 41 of the display 40, and display a drawing board interface in a second screen region 42 of the display 40. As shown in (a) in FIG. 5, the user may manually draw a five-pointed star image 51 (namely, an insertion file) in the drawing board interface, and then the user may drag the five-pointed star image 51 to the first screen region 41 (namely, the video shooting interface) (which is the first input). If the electronic device displays the video frame with a frame number 41 in the first screen region when the first input is received, and a value corresponding to the second input is 30, the electronic device may insert the five-pointed star image 51 between a 71^{st} (that is, (41+30)^{st}) video frame and a 72^{nd} video frame of the original video by using the display chip, to generate the target video. In addition, the electronic device may continuously display, in the first screen region, a video frame with a frame number being greater than 41 in the target video, and as shown in (b) in FIG. 5, the electronic device may display, in the first screen region 41, the five-pointed star image 51 in the target video after displaying the 71^{st} video frame of the target video.

Example 2: In Implementation 2, in a video shooting process, as shown in (a) in FIG. 4, an electronic device displays a video shooting interface in a display 40, and displays, in the video shooting interface, a video frame (namely, an original video) captured by a camera. In this case, if a user needs to change the captured video image, that is, the user needs to insert an image into a currently shot video, the user may make an input to a video shooting interface, for example, the user may trigger, by making an input to a selection menu in the video shooting interface, the electronic device to enable a fun drawing board function of the electronic device. Therefore, as shown in (b) in FIG. 4, the electronic device may display the currently shot video/captured video frame (that is, the original video) in a first screen region 41 of the display 40, and display a drawing board interface in a second screen region 42 of the display 40. As shown in (a) in FIG. 5, the user may manually draw a five-pointed star image 51 (namely, an insertion file) in the drawing board interface, and then the user may drag the five-pointed star image 51 to the first screen region 41 (namely, the video shooting interface) (which is the first input). If the electronic device displays the video frame with a frame number 41 in the first screen region when the first input is received, and a value corresponding to the third input is 30, the electronic device may fuse the five-pointed star image 51 with a 71^{st} frame (that is, (41+30)^{st}) video frame of the original video by using the display chip, to obtain a fused image, and generate the target video based on the fused image and unfused video frames of the original video by using the display chip. In addition, the electronic device may continuously display, in the first screen region, a video frame with a frame number being greater than 41 in the target video, and as shown in (c) in FIG. 5, the electronic device may display, in the first screen region 41, the fused image in the target video after displaying the 70^{th} video frame of the target video.

For other descriptions in this embodiment of this application, refer to the related descriptions in Embodiment 1. To avoid repetition, details are not described herein again.

In the video generation method provided in this embodiment of this application, when the electronic device displays, in the first screen region, the original video currently photographed by the camera and displays the insertion file in the second screen region, if the user needs to insert the insertion file into the original video, the user may trigger, by using the first input to the electronic device, the electronic device to generate the target video based on the original video and the insertion file by using the display chip, obtain the insertion file by using the display chip, and generate the target video based on the original video and the insertion file, and frame insertion processing is performed by an independently disposed display chip, thereby improving efficiency of inserting a file into a video, ensuring smoothness and real-time performance of video images, and reducing power consumption of the master control chip.

### Embodiment 3

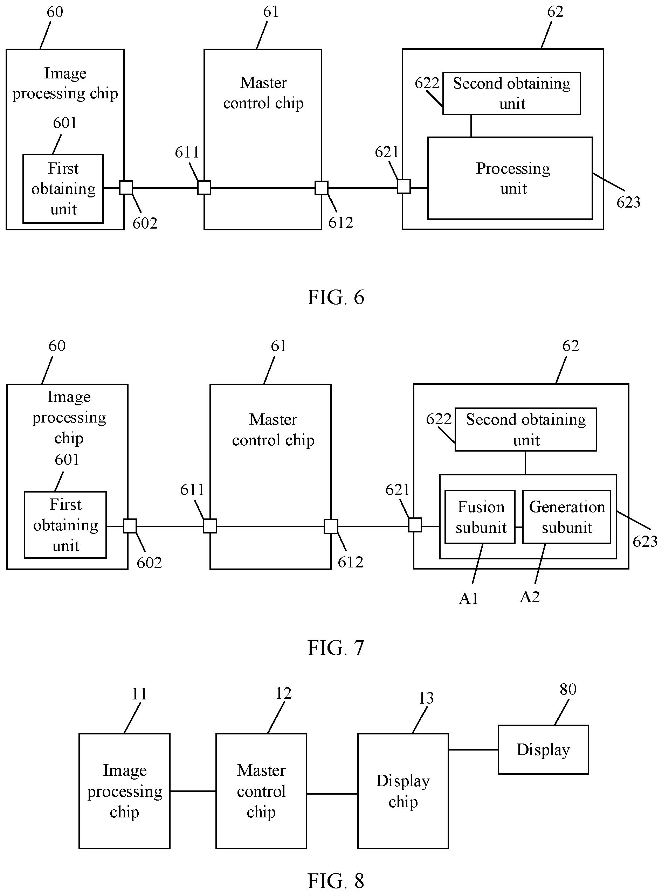

This embodiment of this application provides another video generation circuit. FIG. 6 is a schematic structural diagram of a video generation circuit according to this embodiment of this application. As shown in FIG. 6, the video generation circuit provided in this embodiment of this application includes an image processing chip 60, a master control chip 61, and a display chip 62.

The image processing chip 60 may include a first obtaining unit 601 and a first interface 602. The master control chip 61 may include a second interface 611 and a third interface 612. The display chip 62 may include a fourth interface 621, a second obtaining unit 622, and a processing unit 623.

In this embodiment of this application, the first obtaining unit 601 is configured to obtain an original video captured by a camera. The first obtaining unit 601 is connected to the first interface 602, and the first interface 602 is configured to output the original video. The second interface 611 is separately connected to the first interface 602 and the third interface 612, and the third interface 612 is configured to output the original video. The third interface 612 is connected to the fourth interface 621, and the processing unit 623 is separately connected to the second obtaining unit 622 and the fourth interface 621. The second obtaining unit 622 is configured to obtain an insertion file. The processing unit 623 is configured to generate a target video based on the original video and the insertion file.

It should be noted that, in this embodiment of this application, the image processing chip obtains the original video by using the first obtaining unit, and outputs the original video by using the first interface. Therefore, the master control chip may receive the original video by using the second interface, and output the original video by using the third interface. The display chip may receive the original video by using the fourth interface, obtain the insertion file by using the second obtaining unit, and then generate the target video based on the original video and the insertion file by using the processing unit.

Optionally, in this embodiment of this application, the processing unit may be specifically configured to: insert the insertion file between an N-th video frame and an (N+1)-th video frame of the original video to generate the target video, where N may be a positive integer.

In this embodiment of this application, the display chip may insert the insertion file into the N-th video frame and the (N+1)-th video frame of the original video in a separate form, so as to generate the target video. Therefore, flexibility of inserting the file into the video by the electronic device can be improved, and all elements of each video frame of the original video can also be reserved.

Optionally, in this embodiment of this application, with reference to FIG. 6, as shown in FIG. 7, the processing unit 623 may include a fusion subunit A1 and a generation subunit A2.

In this embodiment of this application, the fusion subunit A1 is separately connected to the fourth interface 621, the second obtaining unit 622, and the generation subunit A2. The fusion subunit A1 may be specifically configured to perform fusion processing on the insertion file and at least one video frame of the original video to obtain at least one fused image; and the generation subunit A2 may be configured to generate the target video based on the at least one fused image and unfused video frames of the original video.

It should be noted that the fusion subunit may first determine at least one video frame of the original video, and then the fusion subunit may separately fuse the insertion file with the at least one video frame to obtain at least one fused image. Therefore, the fusion subunit may send the at least one fused image and unfused video frames in the original video/original file to the generation subunit, and the generation subunit may generate the target video based on the at least one fused image and the unfused video frames of the original video.

In this embodiment of this application, the fusion subunit may perform fusion processing on the insertion file and at least one video frame of the original video to obtain at least one fused image, and then the generation subunit generates the target video based on the at least one frame of fused image and the unfused video frames of the original video. Therefore, compared with the original video, at least some video frames of the target video include a newly added element (for example, the insertion file). This can improve flexibility of inserting the file into the original video by the electronic device, and also maintain continuity of video images shot by the camera while enriching elements of at least some of the video frames of the original video.

For other descriptions in this embodiment of this application, refer to the related descriptions in the above embodiment. To avoid repetition, details are not described herein again.

In the video generation circuit provided in this embodiment of this application, the insertion file is obtained by using the display chip, the target video is generated based on the original video and the insertion file, and frame insertion processing is performed by an independently disposed display chip, thereby improving efficiency of inserting a file into a video, ensuring smoothness and real-time performance of video images, and reducing power consumption of the master control chip.

### Embodiment 4

This embodiment of this application provides an electronic device. FIG. 8 is a schematic structural diagram of an electronic device according to an embodiment of this application. With reference to FIG. 1, as shown in FIG. 8, the electronic device provided in this embodiment of this application may include a display 80 and the video generation circuit in Embodiment 1, and the display 80 is connected to the display chip 13.

The display 80 may be configured to display the target video generated by the display chip 13.

Optionally, in this embodiment of this application, the display may be further configured to display the insertion file and the original video obtained by the image processing chip.

In this embodiment of this application, the display chip may be configured to obtain the insertion file by using the display.

In this embodiment of this application, because the electronic device may display the insertion file and the original video on the display at the same time, richness of display content of the electronic device can be improved.

Optionally, in this embodiment of this application, the display may include a first screen region and a second screen region.

The first screen region may be used to display the original video, and the second screen region may be used to display the insertion file.

In this embodiment of this application, because the electronic device may display the insertion file and the original video in different regions, flexibility of displaying content by the electronic device can be improved.

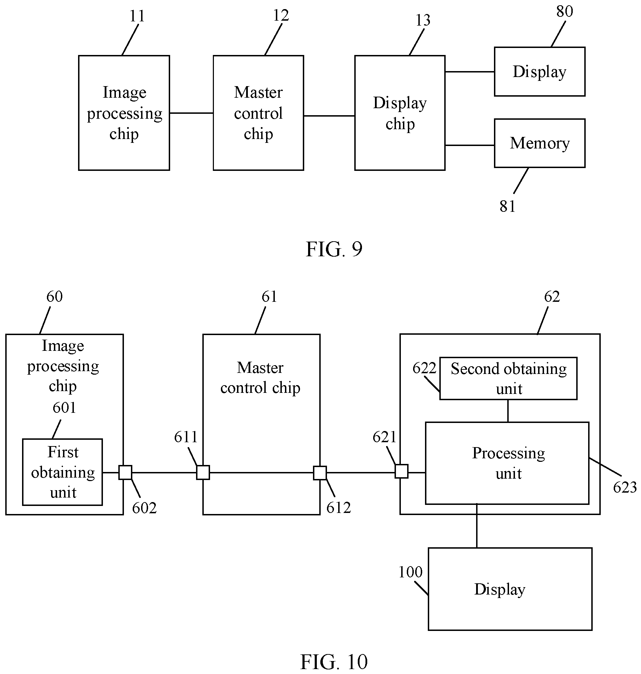

Optionally, with reference to FIG. 8, in this embodiment of this application, as shown in FIG. 9, the electronic device may further include a memory 81, and the memory 81 is connected to the display chip 13.

The memory 81 is configured to store a target video.

For other descriptions in this embodiment of this application, refer to the related descriptions in Embodiment 1 and Embodiment 2. To avoid repetition, details are not described herein again.

In the electronic device provided in this embodiment of this application, after the electronic device generates the target video based on the original video and the insertion file, the electronic device may display the target video by using the display, so that the user can preview an insertion effect and improve user experience.

### Embodiment 5

This embodiment of this application provides an electronic device. FIG. 10 is a schematic structural diagram of an electronic device according to an embodiment of this application. As shown in FIG. 10, the electronic device provided in this embodiment of this application may include a display 100 and the video generation circuit in Embodiment 3, and the display 100 is connected to the processing unit 623.

The display 100 may be configured to display the target video generated by the processing unit 623.

Optionally, in this embodiment of this application, the display 100 may be further configured to display the insertion file and the original video obtained by the first obtaining unit 601. The display chip 62 may be specifically configured to obtain the insertion file by using the display 100.

In this embodiment of this application, because the electronic device may display the insertion file and the original video on the display at the same time, richness of display content of the electronic device can be improved.

Optionally, in this embodiment of this application, the display may include a first screen region and a second screen region. The first screen region may be used to display the original video, and the second screen region may be used to display the insertion file.

In this embodiment of this application, because the electronic device may display the insertion file and the original video in different regions, flexibility of displaying content by the electronic device can be improved.

In the electronic device provided in this embodiment of this application, after the insertion file is inserted into the original video to generate the target video, the electronic device displays the target video by using the display, so that the user can preview an insertion effect and improve user experience.

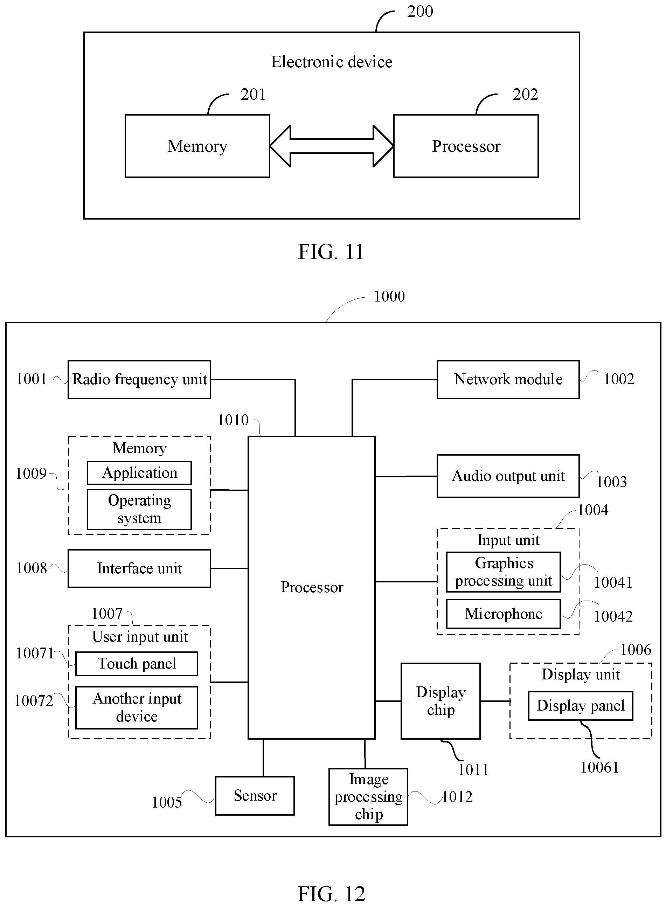

As shown in FIG. 11, an embodiment of this application further provides an electronic device 200, including a processor 202, a memory 201, and a program or an instruction stored in the memory 201 and capable of running on the processor 202. When the program or the instruction is executed by the processor 202, the processes of the foregoing video shooting method embodiment are implemented and a same technical effect can be achieved. To avoid repetition, details are not described herein again.

It should be noted that the electronic device in this embodiment of this application includes the foregoing mobile electronic device and the foregoing non-mobile electronic device.

FIG. 12 is a schematic diagram of a hardware structure of an electronic device according to an embodiment of this application.

The electronic device 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, a processor 1010, a display chip 1011, and an image processing chip 1012.

The processor 1010 may also be referred to as a master control chip.

### One implementation

Optionally, in this embodiment of this application, the processor 1010 may be separately connected to the image processing chip 1012 and the display chip 1011. The image processing chip 1012 may be configured to obtain an original video captured by a camera. The processor 1010 may be configured to send the original video to the display chip 1011. The display chip 1011 may be configured to obtain an insertion file, and generate a target video based on the original video and the insertion file.

Optionally, in this embodiment of this application, the display chip 1011 may be specifically configured to: insert the insertion file between an N-th video frame and an (N+1)-th video frame of the original video to generate the target video, where N is a positive integer.

Optionally, in this embodiment of this application, the display chip 1011 may be specifically configured to perform fusion processing on the insertion file and at least one video frame of the original video to obtain at least one fused image; and generate the target video based on the at least one fused image and unfused video frames of the original video.

In the electronic device provided in this embodiment of this application, the insertion file is obtained by using the display chip, the target video is generated based on the original video and the insertion file, and frame insertion processing is performed by an independently disposed display chip, thereby improving efficiency of inserting a file into a video, ensuring smoothness and real-time performance of video images, and reducing power consumption of the master control chip.

### Another implementation

Optionally, in this embodiment of this application, the image processing chip 1012 includes a first obtaining unit and a first interface. The processor 1010 includes a second interface and a third interface. The display chip 1011 includes a fourth interface, a second obtaining unit, and a processing unit. The first obtaining unit is configured to obtain an original video captured by a camera. The first obtaining unit is connected to the first interface, and the first interface is configured to output the original video. The second interface is separately connected to the first interface and the third interface, and the third interface is configured to output the original video. The third interface is connected to the fourth interface, and the processing unit is separately connected to the second obtaining unit and the fourth interface. The second obtaining unit is configured to obtain an insertion file. The processing unit is configured to generate a target video based on the original video and the insertion file.

Optionally, in this embodiment of this application, the processing unit may be specifically configured to: insert the insertion file between an N-th video frame and an (N+1)-th video frame of the original video to generate the target video, where N is a positive integer.

Optionally, in this embodiment of this application, the processing unit includes a fusion subunit and a generation subunit, and the fusion subunit is separately connected to the fourth interface, the second obtaining unit, and the generation subunit. The fusion subunit is configured to perform fusion processing on the insertion file and at least one video frame of the original video to obtain at least one fused image; and the generation subunit is configured to generate the target video based on the at least one fused image and unfused video frames of the original video.

In the electronic device provided in this embodiment of this application, the insertion file is obtained by using the display chip, the target video is generated based on the original video and the insertion file, and frame insertion processing is performed by an independently disposed display chip, thereby improving efficiency of inserting a file into a video, ensuring smoothness and real-time performance of video images, and reducing power consumption of the master control chip.

A person skilled in the art can understand that the electronic device 1000 may further include a power supply (such as a battery) that supplies power to each component. The power supply may be logically connected to the processor 1010 by using a power supply management system, to implement functions such as charging and discharging management, and power consumption management by using the power supply management system. The structure of the electronic device shown in FIG. 12 does not constitute a limitation on the electronic device. The electronic device may include components more or fewer than those shown in the diagram, a combination of some components, or different component arrangements. Details are not described herein.

The user input unit 1007 may be configured to: in a case that the original video is displayed in a first screen region and the insertion file is displayed in a second screen region, receive a first input of a user. The display chip may be configured to generate a target video based on the original video and the insertion file in response to the first input.

Optionally, in this embodiment of this application, the display chip is specifically configured to: insert the insertion file between an N-th video frame and an (N+1)-th video frame of the original video to generate the target video, where the N-th video frame is determined based on a user input, and N is a positive integer.

Optionally, in this embodiment of this application, the display chip is specifically configured to perform fusion processing on the insertion file and at least one video frame of the original video to obtain at least one fused image; and generate the target video based on the at least one fused image and unfused video frames of the original video, where the at least one video frame is determined based on a user input.

In the electronic device provided in this embodiment of this application, when the user needs to insert the insertion file into a currently shot video, the user may trigger, by using the first input to the electronic device, the electronic device to generate the target video based on the original video and the insertion file by using the display chip, and frame insertion processing is performed by an independently disposed display chip, thereby improving efficiency of inserting a file into a video, ensuring smoothness and real-time performance of video images, and reducing power consumption of the master control chip.

For beneficial effect of the implementations in this embodiment, refer to the beneficial effect of the corresponding implementations in the foregoing method embodiment. To avoid repetition, details are not described herein again.

It should be understood that in this embodiment of this application, the input unit 1004 may include a graphics processing unit (Graphics Processing Unit, GPU) 10041 and a microphone 10042. The graphics processing unit 10041 processes image data of a static picture or a video obtained by an image capture apparatus (for example, a camera) in a video capture mode or an image capture mode. The display unit 1006 may include a display panel 10061. Optionally, the display panel 10061 may be configured in a form such as a liquid crystal display or an organic light-emitting diode. The user input unit 1007 includes a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (such as a volume control button or a power on/off button), a trackball, a mouse, and a joystick. Details are not described herein. The memory 1009 may be configured to store a software program and various data, including but not limited to an application program and an operating system. An application processor and a modem processor may be integrated into the processor 1010, the application processor mainly processes an operating system, a user interface, an application program, and the like, and the modem processor mainly processes wireless communication. It may be understood that, the modem processor may alternatively not be integrated into the processor 1010.

An embodiment of this application further provides a readable storage medium. The readable storage medium stores a program or an instruction, and when the program or the instruction is executed by a processor, the processes of the foregoing video shooting method embodiment are implemented and a same technical effect can be achieved. To avoid repetition, details are not described herein again.

The processor is the processor in the electronic device in the foregoing embodiment. The readable storage medium includes a computer readable storage medium, for example, a read-only memory (Read-Only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to run a program or an instruction to implement the processes of the foregoing video shooting method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be mobile phone, a computer, a server, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A video generation circuit, comprising an image processing chip, a master control chip, and a display chip, wherein the master control chip is separately connected to the image processing chip and the display chip, wherein
the image processing chip is configured to obtain an original video captured by a camera;
the master control chip is configured to send the original video to the display chip; and
the display chip is configured to obtain an insertion file, and generate a target video based on the original video and the insertion file.

2. The video generation circuit according to claim 1, wherein the display chip is specifically configured to:
insert the insertion file between an N-th video frame and an (N+1)-th video frame of the original video to generate the target video, wherein N is a positive integer.

3. The video generation circuit according to claim 1, wherein the display chip is specifically configured to:
perform fusion processing on the insertion file and at least one video frame of the original video to obtain at least one fused image; and
generate the target video based on the at least one fused image and unfused video frames of the original video.

4. A video generation method, applied to the video generation circuit according to any one of claims 1 to 3, and comprising:
in a case that the original video is displayed in a first screen region and the insertion file is displayed in a second screen region, receiving a first input of a user; and
generating the target video based on the original video and the insertion file by using the display chip in response to the first input.

5. The video generation method according to claim 4, wherein the generating the target video based on the original video and the insertion file by using the display chip comprises:
inserting, by using the display chip, the insertion file between an N-th video frame and an (N+1)-th video frame of the original video to generate the target video, wherein the N-th video frame is determined based on a user input, and N is a positive integer.

6. The video generation method according to claim 4, wherein the generating the target video based on the original video and the insertion file by using the display chip comprises:
performing, by using the display chip, fusion processing on the insertion file and at least one video frame of the original video to obtain at least one fused image, wherein the at least one video frame is determined based on a user input; and
generating the target video based on the at least one fused image and unfused video frames of the original video.

7. A video generation circuit, comprising an image processing chip, a master control chip, and a display chip, wherein the image processing chip comprises a first obtaining unit and a first interface, the master control chip comprises a second interface and a third interface, and the display chip comprises a fourth interface, a second obtaining unit, and a processing unit, wherein
the first obtaining unit is configured to obtain an original video captured by a camera;
the first obtaining unit is connected to the first interface, and the first interface is configured to output the original video;
the second interface is separately connected to the first interface and the third interface, and the third interface is configured to output the original video;
the third interface is connected to the fourth interface, and the processing unit is separately connected to the second obtaining unit and the fourth interface;
the second obtaining unit is configured to obtain an insertion file; and
the processing unit is configured to generate a target video based on the original video and the insertion file.

8. The video generation circuit according to claim 7, wherein the processing unit is specifically configured to:
insert the insertion file between an N-th video frame and an (N+1)-th video frame of the original video to generate the target video, wherein N is a positive integer.

9. The video generation circuit according to claim 7, wherein the processing unit comprises a fusion subunit and a generation subunit, and the fusion subunit is separately connected to the fourth interface, the second obtaining unit, and the generation subunit, wherein
the fusion subunit is configured to perform fusion processing on the insertion file and at least one video frame of the original video to obtain at least one fused image; and
the generation subunit is configured to generate the target video based on the at least one fused image and unfused video frames of the original video.

10. An electronic device, comprising a display and the video generation circuit according to any one of claims 1 to 3, wherein the display is connected to the display chip; and
the display is configured to display the target video generated by the display chip.

11. The electronic device according to claim 10, wherein the display is further configured to display the insertion file and the original video obtained by the image processing chip; and
the display chip is configured to obtain the insertion file by using the display.

12. The electronic device according to claim 11, wherein the display comprises a first screen region and a second screen region; and
the first screen region is used to display the original video, and the second screen region is used to display the insertion file.

13. An electronic device, comprising a display and the video generation circuit according to any one of claims 7 to 9, wherein the display is connected to the processing unit; and
the display is configured to display the target video generated by the processing unit.

14. The electronic device according to claim 13, wherein
the display is further configured to display the insertion file and the original video obtained by the first obtaining unit; and
the display chip is specifically configured to obtain the insertion file by using the display.

15. The electronic device according to claim 14, wherein the display comprises a first screen region and a second screen region; and
the first screen region is used to display the original video, and the second screen region is used to display the insertion file.

16. A computer software product, wherein the computer software product is executed by at least one processor to implement the video generation method according to any one of claims 4 to 6.

17. An electronic device, wherein the electronic device is configured to perform the video generation method according to any one of claims 4 to 6.
